# EUROPEAN PATENT SPECIFICATION

(11) **EP 0 575 658 B1**
(45) Date of publication and mention of the grant of the patent: **28.10.1998**
(21) Application number: 92110866.8
(22) Date of filing: 26.06.1992
(51) Int. Cl.: F16H 59/02, F16H 59/04

(54) **Shift system having a manual speed selecting mechanism for a vehicular automatic transmission**
Schaltanlage mit manuellem Übersetzungswahlmechanismus für ein automatisches Kraftfahrzeuggetriebe
Système de changement de vitesse comportant un mécanisme de sélection manuelle de vitesse pour une transmission automatique de véhicule

(43) Date of publication of application: 29.12.1993
(73) Proprietor: AISIN AW CO., LTD., Anjo-shi Aichi-ken (JP)
(72) Inventor: Moroto, Shuzo, Nagoya-shi, Aichi-ken (JP); Hattori, Masashi, Anjo-shi, Aichi-ken (JP); Ohara, Shigekazu, Chirya-shi, Aichi-ken (JP)
(74) Representative: VOSSIUS & PARTNER

(56) References cited:
- EP-A- 0 331 797
- EP-A- 0 413 116
- DE-A- 4 035 713
- FR-A- 2 437 315
- US-A- 4 326 432

## Description

The present invention relates to a shift system for use with a vehicular automatic transmission and, more particularly, to a shift system capable of switching between an ordinary shift range change and a manual speed selection.

A shifting portion of an existing automatic transmission has an I-shaped shift pattern, in which not only the individual ranges of parking (as will be abbreviated to "P"), reverse ("R"), neutral ("N") and drive ("D") ranges but also a second range (as will be abbreviated to "S") and a low range ("L") for modes of engine braking for a downhill run are arranged in a series passage.

The existing automatic transmission is constructed to effect the speed changes having a combination of two modes: the range change for determining each of the P, R, N, D, S and L ranges by mechanically switching the manual valve in a hydraulic servo control circuit for actuating the frictional engagement elements thereof; and the speed change for selecting a predetermined gear stage in the determined range by controlling the solenoid valve in the hydraulic servo control circuit electronically in accordance with the running speed and throttle opening of the vehicle. In the D, S and L ranges in the running mode, moreover, the speed changes in each range are automatically effected.

In order to realize a run suited for the human feel, on the contrary, there has been developed in recent years a shift system, to which is added a manual speed selecting mechanism enabled to select a specific gear stage intentionally while reflecting the intention of a driver positively on the run and considering the fun to drive.

This shift system is exemplified by the technology which is disclosed in Japanese Patent Laid-Open No. 8545/1990. In this system, the automatic shift is carried out as in the prior art by turning the shift lever in a first shift passage along the ordinary I pattern, and the manual speed change is carried out by switching the shift lever sideways to a second shift passage parallel to the first shift passage and then turning it in the second shift passage. In this system, moreover, the turn of the shift lever in the first shift passage is mechanically transmitted to the transmission, and the turn of the shift lever in the second shift passage is detected by a sensor constituting the switch means until it is electrically transmitted to the transmission.

In the shift system described above, however, no means is provided for restricting and holding an associative member, which is used for transmitting the motion of the shift lever in the first shift passage to the transmission, in an uncoupled position, when the coupling between the shift lever and the associative member is released by the transverse shift of the shift lever. As a result, the re-coupling of the shift lever when returned to the first shift passage may lack smoothness due to the misalignment.

From EP-A-0 413 116 which constitutes the closest prior art, a shift system with a manual speed selecting mechanism for a vehicular automatic transmission is known. This shift system comprises a stationary member mounted on a vehicle body; a rocking retainer supported in a manner to rock on a first axis formed in said stationary member and connected to the automatic transmission; a shift lever supported in a manner to rotate on said first axis and a second axis, which is perpendicular to said first axis, and brought into and out of engagement with said rocking retainer when rotated on said second axis; switch means for detecting the rotation of said shift lever and a lock member supported on said rocking retainer for bringing said rocking retainer into and out of engagement with said stationary member when actuated by the rotation of said shift lever on said second axis. The lock member is pivoted by the position of the shift lever and the effect of a spring.

With the background in mind, the present invention has an object to provide a shift system with a manual speed selecting mechanism for a vehicular automatic transmission, which system can effect a smooth return from the manual speed selecting operation to the automatic shifting operation of the shift lever and can prevent the manual valve of the automatic transmission from being accidentally switched by the shocks or the like applied to the vehicle body during the manual speed selection.

In order to achieve the above-specified object, therefore, there is provided according to the present invention a shift system with a manual speed selecting mechanism for a vehicular automatic transmission, which system comprises: a stationary member mounted on a vehicle body; a rocking retainer supported in a manner to rock on a first axis formed in said stationary member and connected to the automatic transmission; a shift lever 3 supported in a manner to rotate on said first axis and a second axis, which is perpendicular to said first axis, and brought into and out of engagement with said rocking retainer when rotated on said second axis; and switch means for detecting the rotation of said shift lever. According to the feature of the present invention, there is further comprised a lock plate supported on said rocking retainer for bringing said rocking retainer into and out of engagement with said stationary member when actuated by the rotation of said shift lever on said second axis.

In the shift system having the structure specified above according to the present invention, the lock plate supported on the rocking retainer is actuated by the rotation of the shift lever on the second axis to bring the rocking retainer into and out of the stationary member. As a result, the rocking retainer can be prevented from any erroneous motion during the manual speed selection of the shift lever thereby to warrant the smooth re-engagement between the shift lever and the rocking retainer when the shift is returned to the automatic mode. Since, moreover, the rocking retainer connected to the manual valve is locked in a fixed position during the manual speed selection, the manual valve can be prevented from being carelessly switched by the shocks or the like applied to the vehicle body.

Other objects, features and advantages of the present invention will become apparent from the following description to be made with reference to the accompanying drawings, in which:
Fig. 1 is an exploded perspective view showing the whole structure of one embodiment of the present invention:
Fig. 2 shows the whole structure with the individual components being overlapped and presents a side elevation at (a), a back elevation at (b), and a top plan view at (c);
Fig. 3 is a perspective view showing the connected mode of the system of the embodiment to the automatic transmission;
Fig. 4 is an exploded perspective view showing a switch box of the system of the embodiment;
Fig. 5 is a top plan view showing a PC board in the switch box;
Fig. 6 is a side elevation showing the operations of the system of the embodiment in a sequential order;
Fig. 7 is a top plan view showing the operations of a lock plate of the system of the embodiment; and

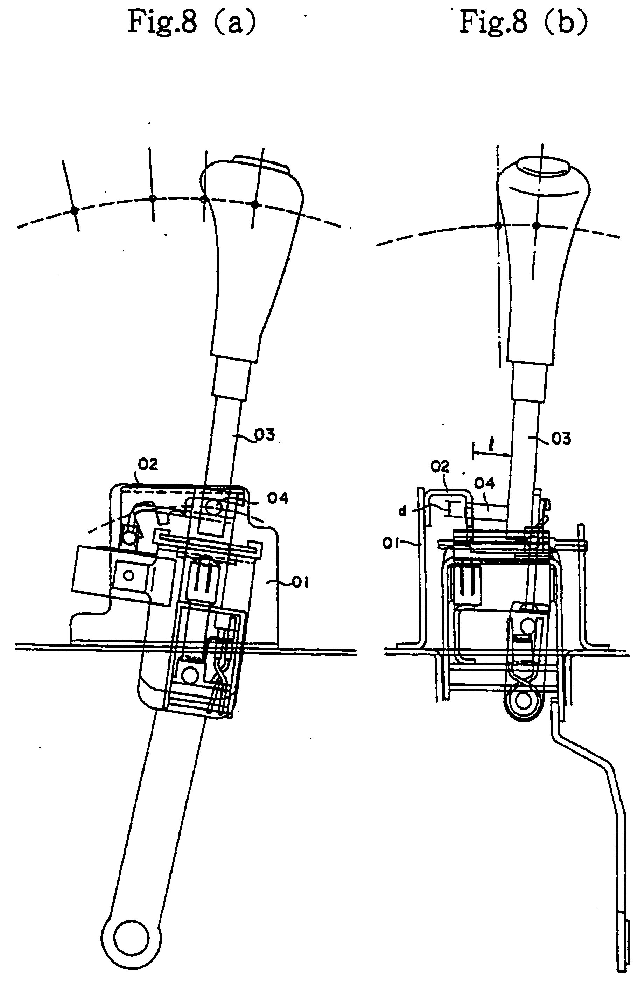

Fig. 8 shows the structure of an example of the prior art and presents a side elevation at (a) and a back elevation at (b).

The present invention will be described in the following in connection with one embodiment thereof with reference to the accompanying drawings.

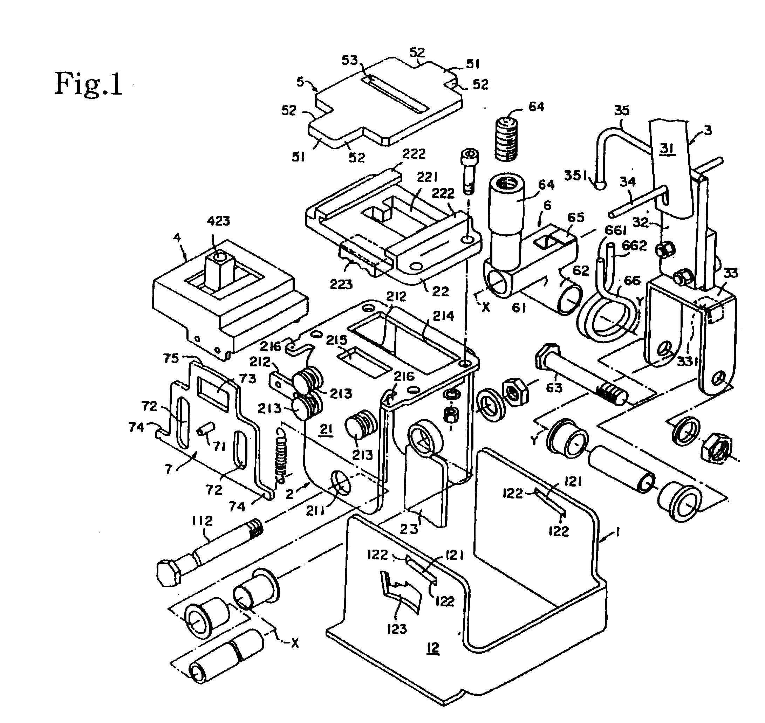

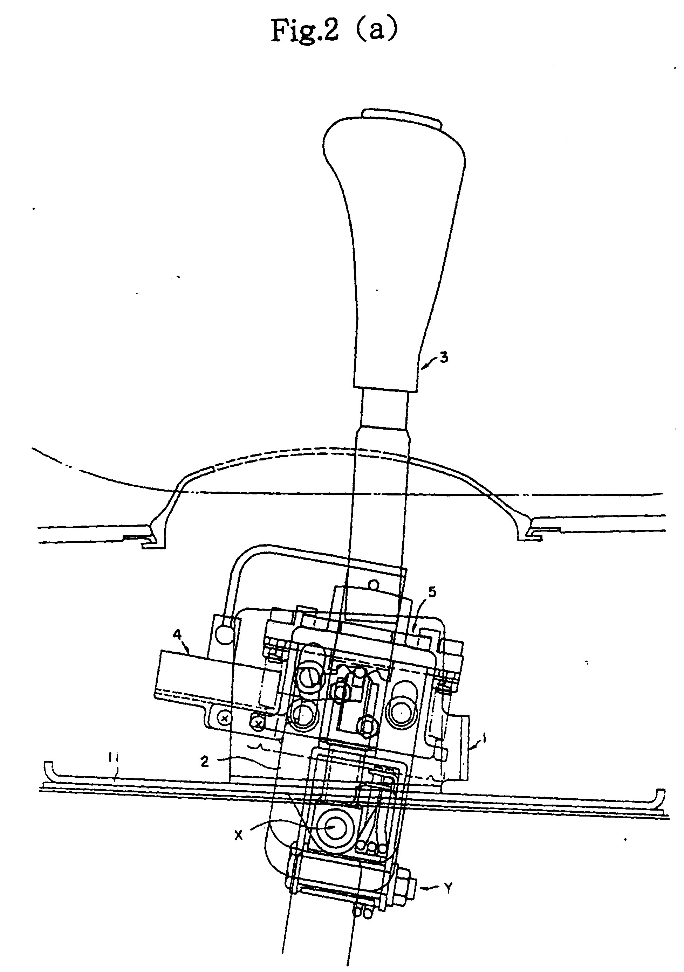

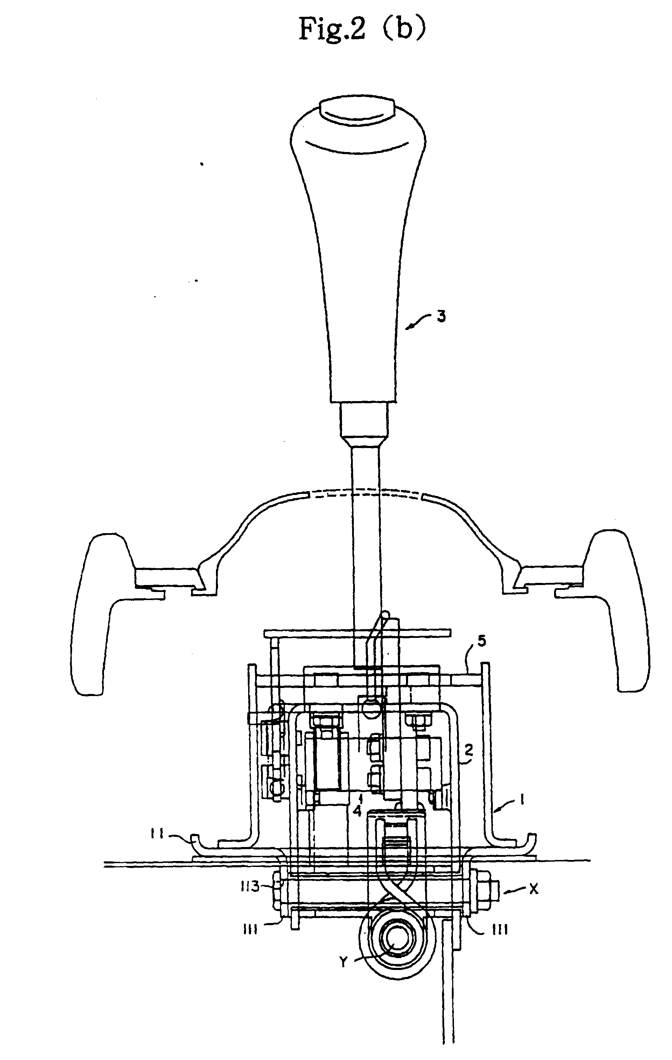

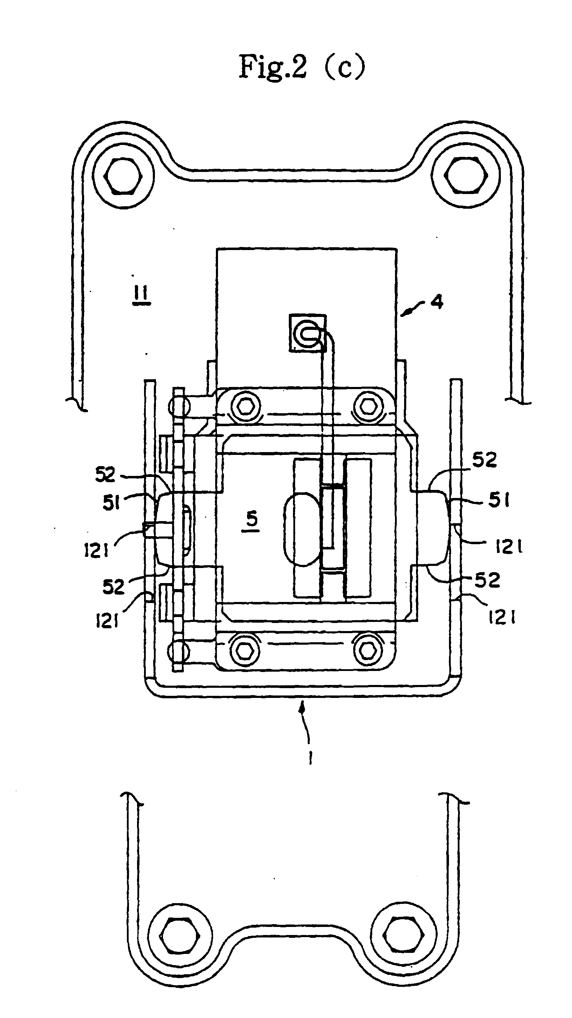

Figs. 1 and 2 show the whole structure of the embodiment of the present invention. Of these, Fig. 1 presents an exploded perspective view of the structure, and Fig. 2 presents a side elevation at (a), a back elevation at (b) and a top plan view at (c) such that it shows the individual components of the structure in an overlapped manner. In the description to be made on the description, the expressions of "longitudinal", "transverse", "vertical" and so on are based, for conveniences of description, on the basis of the arrangement of a shift system of the embodiment on a vehicle or automobile so that they should not limit the gist of the present invention.

As shown in Fig. 1, this shift system is constructed to include: a stationary member 1 mounted on a not-shown vehicle body; a rocking retainer 2 supported in a manner to rock longitudinally on the first axis (as will also be referred to as the "transverse axis") X that is formed in the stationary member 1; a shift lever 3 supported in a manner to rotate longitudinally on the transverse axis X and transversely on the second axis (as will also be referred to as the "longitudinal axis") Y that is perpendicular to the longitudinal axis X, so that it comes into and out of engagement with the rocking retainer 2 when rotated transversely on the longitudinal axis Y; and a switch box 4 acting as switch means for detecting the rotation of the shift lever 3.

On the rocking retainer 2, moreover, there is supported a lock plate 5 which is actuated by the transverse rotation of the shift lever 3 on the longitudinal axis Y to bring the rocking retainer 2 into and out of engagement with the stationary member 1.

The individual parts will be described in more detail. First of all, the stationary member 1 is composed of a dish-shaped support portion (as shown in Fig. 2) fastened to the not-shown vehicle body by means of bolts, and a generally C-shaped body portion 12 welded to the upper face of the support portion 11 and having its front opened. Moreover, the support portion 11 is formed at its central portion with a pair of downward projecting brackets 111, which are formed with bolt holes 113 for fitting therein a bolt 112 forming the transverse axis X. The body portion 12 has its paired transverse side walls punched to form slots 121 at their upper portions. These holes 121 have their front and back faces forming rock locking faces 122 of the lock plate 5. The transverse side wall of the body portion 12 is further formed at its central portion with an inhibit hole 123 which provides an inhibit cam surface at its upper face.

Next, the rocking retainer 2 is composed of: a body 1 having its lower portion opened to form a shape of letter "C"; a gate plate 22 made of plastics and having its four corners fastened to the upper wall of the body 21 by means of bolts; and a manual valve connection member 23 (having a connection relation to an automatic transmission, as will be described in detail hereinafter) welded to the lower end in the righthand wall of the gate plate 22. The body 21 has its two side walls formed at their lower portions with holes 211 for fitting the aforementioned bolt 112 and at their front edges with brackets 212 which project to mount and support the switch box 4. The lefthand wall of the body 21 is equipped with three guide posts 213 which engage with slide slots 72 of an inhibit plate 7 (as will be detailed hereinafter) to guide the vertical movements of the inhibit plate 7. The body 21 has its upper wall punched to form a hole 214 for fitting the shift lever 3 and a hole 215 for fitting a detent cam 223 (as will be detailed hereinafter). Moreover. the upper wall of the body 21 is projected leftward to form a pair of spring support projections 216. On the other hand, the gate plate 22 is formed with: a hole 221 for fitting the shift lever 3; a pair of grooved flanges 222 for sliding and guiding the lock plate 5 in a direction intersecting the hole 221 at a right angle; and the detent block 223 projecting from the lower face to form a cam surface on its lower face. The hole 221 is formed into a shape of letter "H", in which I-shaped holes are connected to each other at their central portions. The connected portion of the hole 221 has a length which has a size substantially equalized to the longitudinal length of the connection portion 32 of the shift lever 3 fitted therein. As a result, the shift lever 3 has its motion transmitted through the gate plate 22 to the body 21 when it is rotated longitudinally on the transverse axis X while being positioned in the connected portion of the hole 221 of the gate plate 22.

The lock plate 5 is formed of plastics into a cross shape and is formed at its center with an I-shaped slot 53 for fitting the connection portion 32 of the shift lever 3. This slot 53 has its width substantially equalized to the transverse width of the connection portion 32 of the shift lever 3 and its length substantially equalized to the gap between the grooved flanges 222 of the gate plate 22. As a result, the lock plate 5 is guided by the grooved flanges 222, when the shift lever 3 rotates transversely on the longitudinal axis Y, so that it moves therewith to slide in a direction perpendicular to the hole 221 of the gate plate 22. When the shift lever 3 rotates longitudinally on the transverse axis X, on the contrary, the lock plate 5 will not move together with the shift lever 3.

This shift lever 3 is composed of: a stem 31 having a shift knob attached thereto; the connection portion 32 welded to the lower end of the stem 31; and a generally C-shaped arm portion 33 fastened to the lower end of the connection portion 32 by means of bolts. In the lower portion of the stem 31, moreover, there is arranged an inhibit pin 34 which is allowed to move vertically as in the shift lever of the prior art. To the upper edge of the connection portion 32, on the other hand, there is welded a shift arm 35 for switching the switch box 4. This shift arm 35 is formed with a ball portion 351 at its leading end. The arm portion 33 is supported on a cross sleeve 6 through a bolt 63 for fitting a sleeve portion 62 therein, so that it can rotate transversely on the longitudinal axis Y.

The cross sleeve 6 is composed of sleeve portions 61 and 62 which intersect each other at a right angle for fitting the bolt 112 forming the transverse axis X and the bolt 63 forming the longitudinal axis Y. The cross sleeve 6 is equipped with a detent plunger mechanism 64 which is raised from the lefthand upper face of the sleeve portion 81. The detent plunger mechanism 64 constitutes detent means which is associated with the aforementioned detent block 223 for the shift lever 3 against the rocking retainer 2. In this detent means, a plunger 641 to be pushed up by a spring has its upper end associated with the downward cam surface of the detent block 223 to latch the shift lever 3 in each of the selected speed positions and to establish a moderation at a time of shifting between the individual speed positions. In parallel with the sleeve portion 62, moreover, there is disposed a torsion spring abutment member 65 which is extends backward from the righthand upper face of the sleeve 6. This abutment member 65 is clamped between the two actuation ends 661 and 662 of a torsion spring 66 which has its coil portion wound around the rear portion of the sleeve 62, thereby to support the actuation ends 661 and 662. The aforementioned arm portion 33 is equipped with a similar torsion spring abutment member 331 which projects forward. As a result, the abutment member 331 pushes one of the two actuation ends 661 and 662 of the torsion spring 66, when the shift lever 3 is rotated transversely with respect to the cross sleeve 6. Since the other of the actuation ends is supported on the abutment member 65, a righting force is exerted upon the shift lever 3 by the torsion spring 66.

At the generally central portion of the inhibit plate 7, there is embedded a plate pin 71 which is fitted in the aforementioned inhibit hole 123 of the stationary member body portion 12 and associated with the inhibit cam surface to constitute an inhibit mechanism. The inhibit plate 7 is punched at the two sides of the plate pin 71 to form the slots 72 for fitting the guide posts 213 attached to the body 21 of the rocking retainer 2. The inhibit plate 7 is further punched at its upper portion to form a hole 73 for fitting the transverse ear portion of the aforementioned cross-shaped lock plate 5. The inhibit plate 7 is formed with spring support projections 74 at the two sides of its lower end. Incidentally, the inhibit plate 7 has its upper edge 75 formed into an arcuate shape on the transverse axis X when it takes a raised position. This arcuate upper edge 75 plays a role to transmit the displacement of the shift lever 3 to the inhibit plate 7 while avoiding the interference of the rocking motion of the shift lever 3 with the inhibit pin 34.

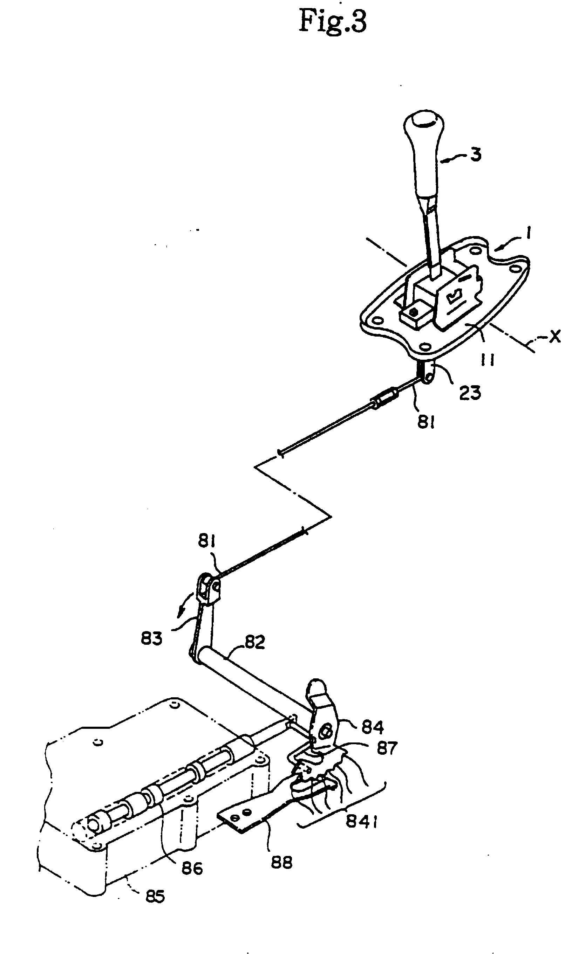

Fig. 3 is a perspective view showing a connection mechanism between the aforementioned manual valve connection member and the automatic transmission. The manual valve connection member 23 is connected through a control rod 81 to an outer lever 83 which is attached to one end of a manual shaft 82. The other end of this manual shaft 82 is equipped with a detent lever 84, which is connected through a rod 87 to a manual valve 86 sliding in a valve body 85. The detent lever 84 has its peripheral surface formed with cam notches 841. A detent spring 88 is arranged to have its actuation end abutting against the cam notches 841.

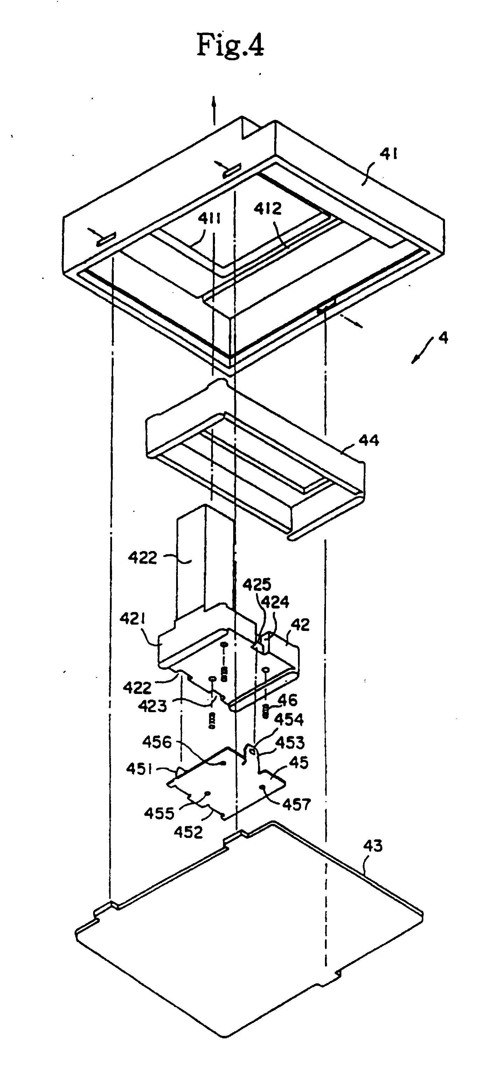

The switch box 4 is fastened to the bracket 212 of the body portion 21 by means of screws. Fig. 4 is an exploded perspective view showing the detail of the switch box 4. This switch box 4 is composed of a casing 41, a slider 42 sliding in the casing 41, and a printed circuit board (as will be shortly referred to as the "PC board") 43. A contact plate 45 is attached to the slider 42, and a slider guide 44 is sandwiched between the casing 41 and the slider 42. The slider guide 44 is allowed to slide longitudinally in the casing such that the not-shown projections embedded in its upper face are fitted in and guided by guide grooves 412 which are formed in the lower face of the casing 41. Thus, the slider guide 44 constitutes both a stopper for preventing the slider 42 from coming out upward from a casing opening 411 and guide means for guiding the slider 42 transversely. This slider 42 is formed with a joint portion 422 which is raised from the upper face of a block portion 421 to project to the outside through the casing opening 411. The ball portion 351 of the actuation arm 35 is slidably fitted in a cylindrical face 423 (as shown in Fig. 1) formed in the joint portion 422. The block portion 421 of the slider 42 is formed with front two and rear one notches 422 to 424. The contact plate 45 is supported, while being prevented from coming out, on the slider 42 by having its projections 451 to 453 fitted in those notches 422 to 424 and by having its erected portions (one of which is designated at numeral 454) of the projections 451 to 453 engaging with the step portions (one of which is also detected at numeral 425) of the aforementioned notches 422 to 424. The contact plate 45 has its lower face formed with three contacts 455 to 457 which are projected from the apexes of a triangle. At the back of those contacts 455 to 457, there are arranged under compression three springs 46 which are fitted in the holes formed in the block portion 421 of the slider 42. As a result, the three contacts 455 to 457 of the contact plate 45 are held to contact with the PC board 43 by the suitable spring forces. Incidentally, connection terminals are arranged on the step portions at the back of the casing 41, although not shown.

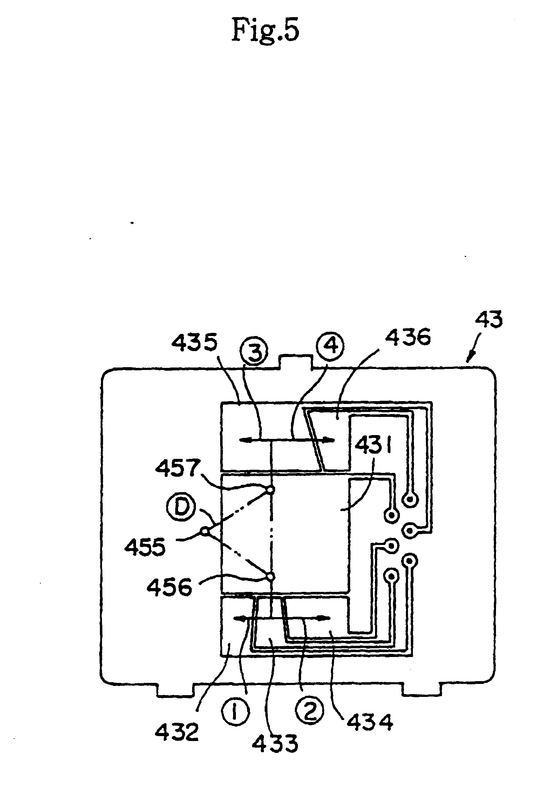

Fig. 5 is a top plan view showing the circuit pattern of the PC board and the positional relations among the three contacts to contact with the circuit pattern. As shown, the PC board 43 is equipped with six mutually isolated conductors 431 to 436. The center, conductor 431 is always held in contact with any contact of the contact plate 45, but the remaining conductors are brought into any of the rear two contacts 456 and 457 as the contact plate 45 is moved. In this embodiment: the conductor 432 is used for the 1st speed; the conductor 434 is used for the 2nd speed; the conductor 435 is used for the 3rd speed; the conductor 436 is used for the 4th speed, but the conductor 433 is left unused. The individual contacts are in the positional relation, as indicated at circled D, when the shift lever 3 is in the P, R, N and D positions.

Next, the operations of the shift system thus constructed will be sequentially described in the following.

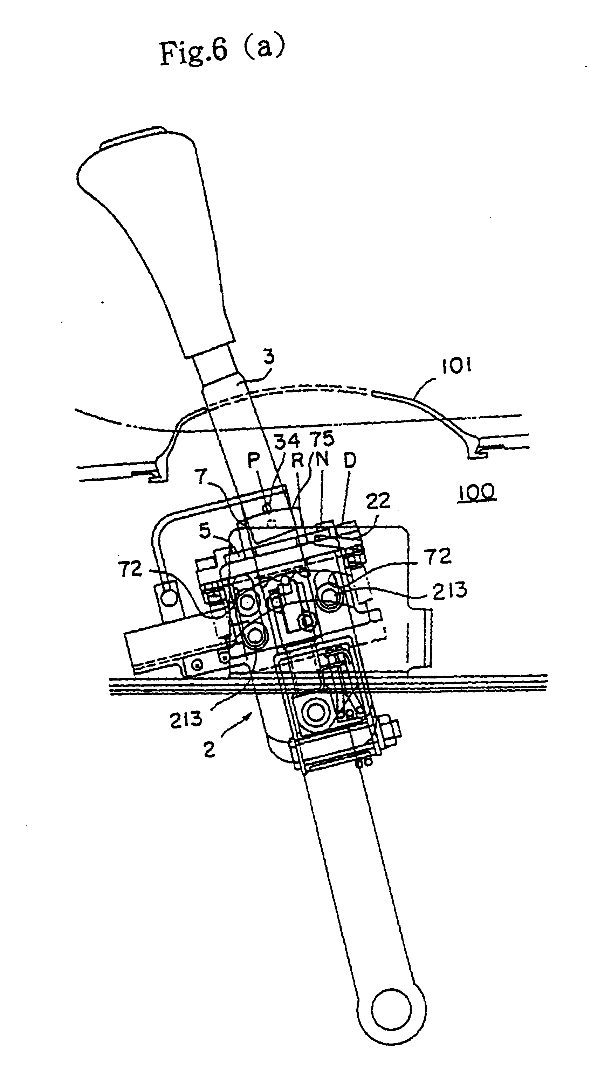

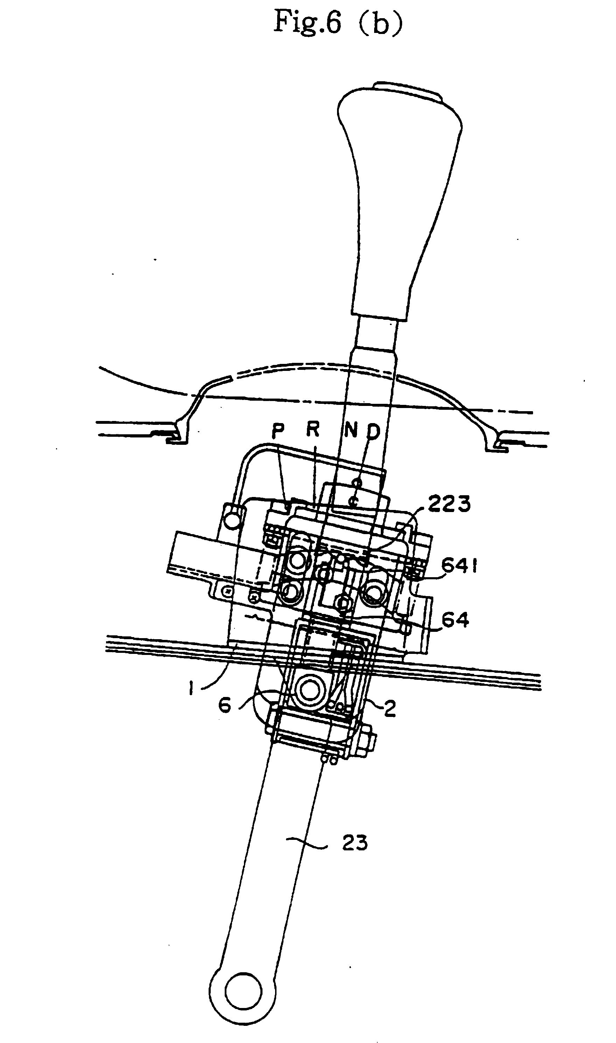

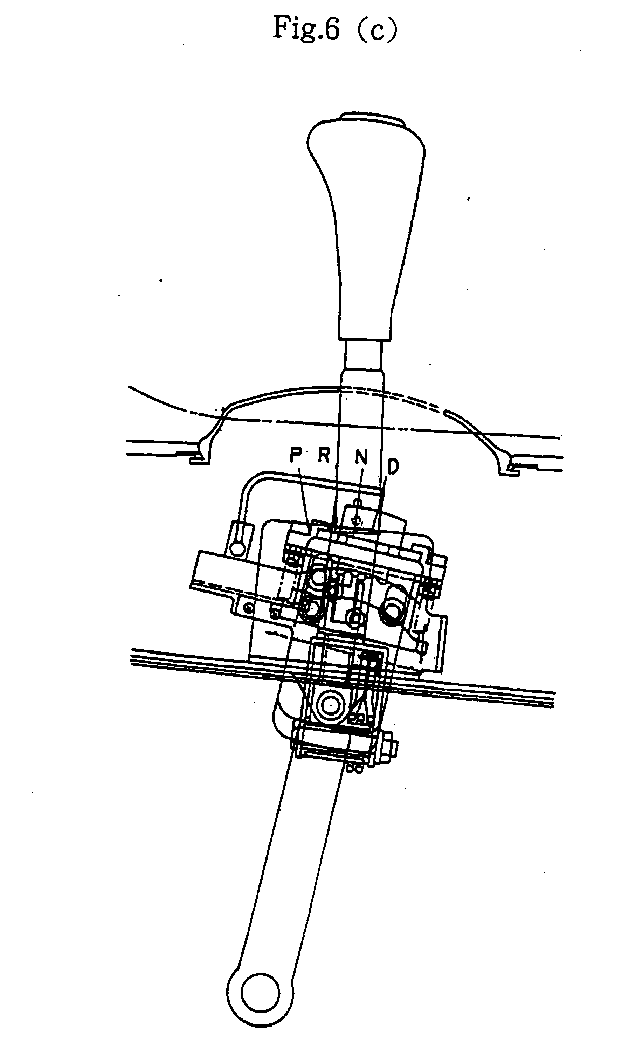

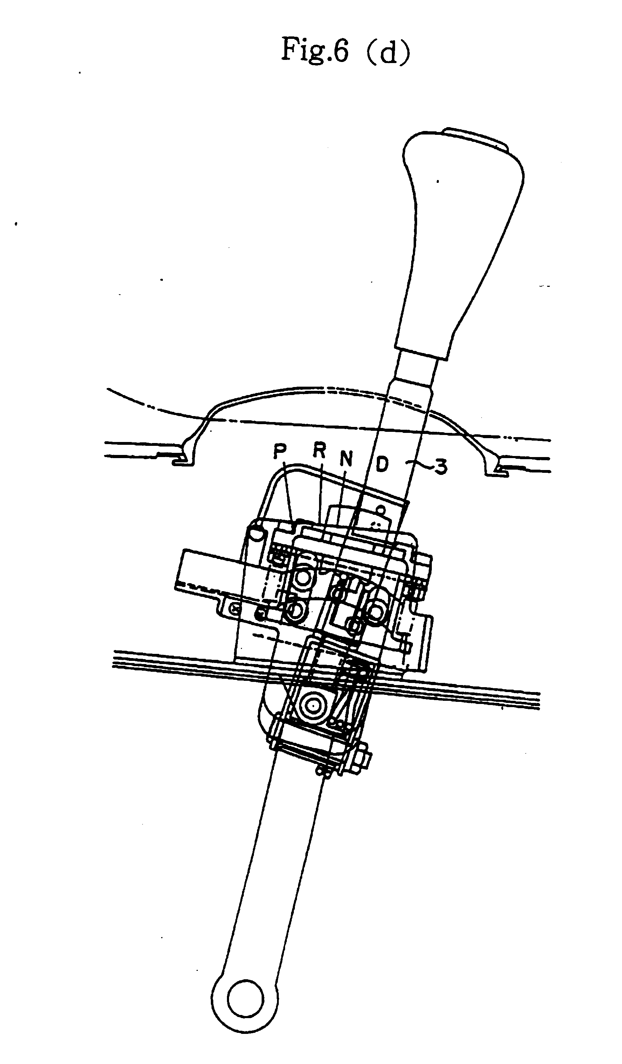

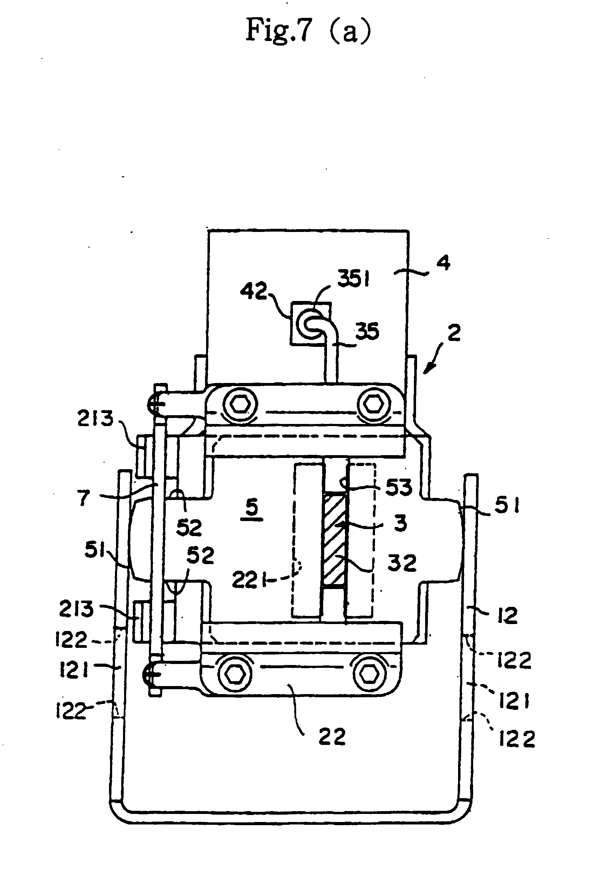

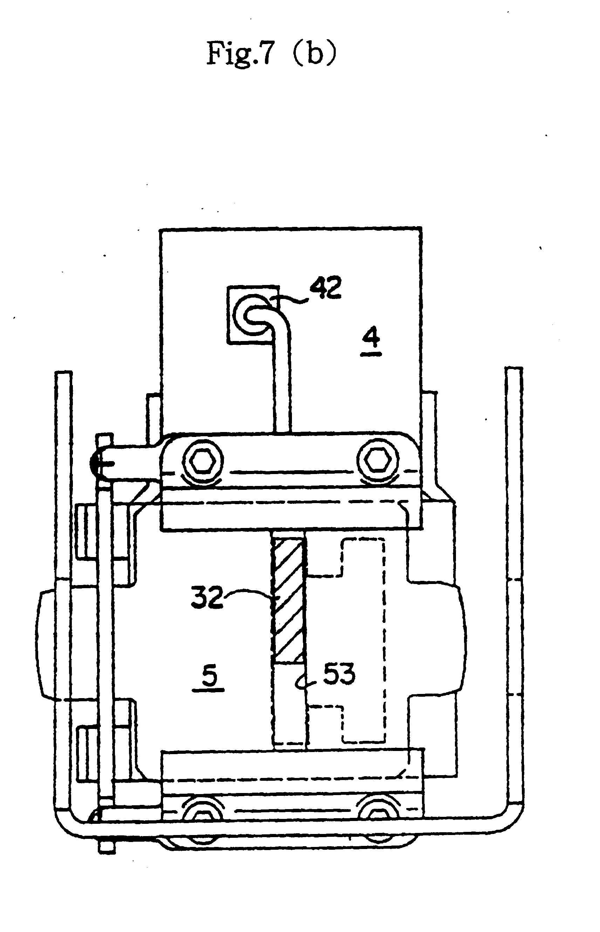

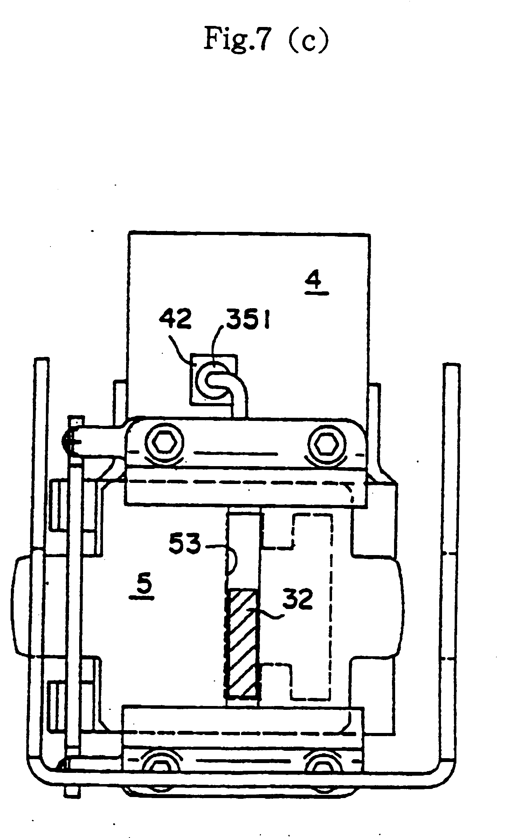

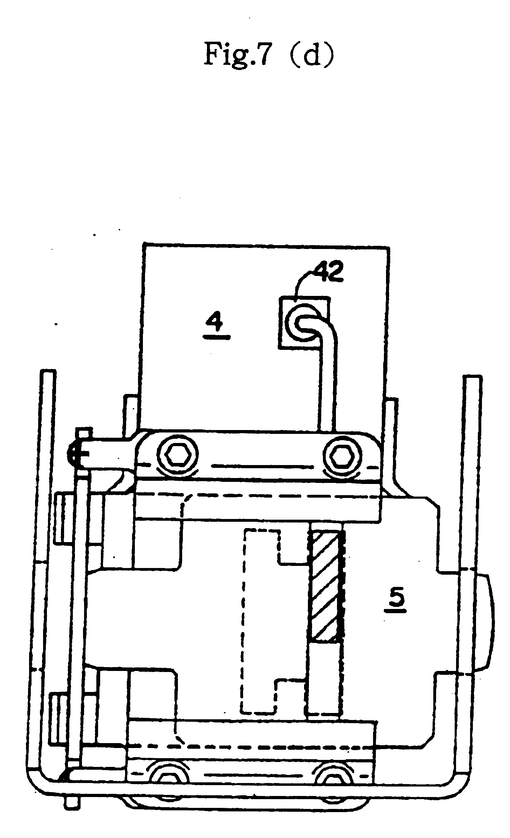

Figs. 6(a) to 6(d) are side elevations showing the motions of the individual members of the shift system in the overlapped manners, and Figs. 7(a) to 7(d) are top plan views showing the actions of the lock plate 5 of the shift system. Incidentally, Fig. 7 omits the inclinations of the individual members, which are caused by the inclinations of the rocking retainer 2.

Fig. 6(a) and Fig. 7(a) show the P position, in which the rocking retainer 2 is rocked into the foremost inclined state. In this state, the shift lever 3 is transversely positioned by the lock plate 5 so that it is in the connected portion of the H-shaped hole 221 of the gate plate 22. Then, the plate pin 71 of the inhibit plate 7 is fitted in the foremost notch of the cam surface of the inhibit hole 123, as shown in Fig. 1, so that it is in the inhibit state.

When the shift lever 3 is pulled backward from that P position while pushing the knob button, the inhibit plate 7 has its upper edge 75 depressed by the push of the inhibit pin 34 so that it is guided downward by the guide post 213 until its plate pin 71 comes out of engagement with the foremost notch of the cam surface of the inhibit hole 123. Since the shift lever 3 and the gate plate 22 are engaged longitudinally in the central connected portion of the H-shaped hole 221, the rocking retainer 2 is then rocked backward together with the shift lever 3 to reach the D position, as shown in Fig. 6(b), by way of the R and N positions. In this meanwhile, the transverse rotation of the shift lever 3 is regulated, as shown in Fig. 7(a), by the sliding abutment between the rotation regulating face 51 of the lock plate 5 and the side wall inner face of the body portion 12. As a result of this motion, the manual valve connection member 23 is rocked longitudinally on the transverse axis X, as shown in Fig. 3, to push the control rod 81 connected to the lower end thereof so that the outer lever 83 is rocked counter-clockwise, as indicated by arrow, to retract the rod 87 by the rocking motions of the manual shaft 82 and the detent lever 84 in the same direction. Thus, the manual valve 86 is switched. The moderation in this operation is given by the spring force of the detent spring 88 against the action of the detent lever 84. The operations described above are not especially different from those of the shift system of the automatic transmission of the prior art.

When the shift lever 3 reaches the D position, the rotation regulating face 51 of the lock plate 5 takes the position aligned with the slots 121 so that the lock plate 5 is released from its regulation of transverse rotation and allowed to rotate.

If the 1st speed is selected in this position, the shift lever 3 is fallen leftward and then pushed forward. As a result of this leftward fall, the shift lever 3 pushes the lock plate 5 leftward so that its rock regulating face 52 slides leftward to come into engagement with the rock locking faces 122 of the holes 121 of the body portion 12. Thus, the rocking retainer 2 is regulated in its longitudinal rocking motion, but only the shift lever 3 is set free of any regulation. In these motions, the ball portion 351 of the actuation arm 35 fixed on the shift lever 3 slides the slider 42 of the switch box 4 to the left.

At this time, the righting force by the torsion spring 66 (as shown in Fig. 1 and Figs. 2(a) and 2(b)) is applied to the shift lever 3 so that a resisting feel similar to that of the manual shift system of the prior art is transmitted to the driver. In the subsequent forward motion, as shown in Fig. 7(b), the connection portion 32 of the shift lever 3 slides forward along the slot 53 of the lock plate 5 to move the slider 42 of the switch box 4 forward. At this time, the plunger 641 of the cross sleeve 6 rides over the intermediate crests from the central to front notches of the cam surface of the detent cam 223. Then, the resistance to the action by the force of the plunger raising spring is transmitted as the moderation to the driver. This moderation is identical to a shift feel which could be obtained by the detent spring 88 and the cam notch 841 (as shown in Fig. 3) at the time of a shift from the P position to the D position. It is quite natural that the detent plunger mechanism 64 and the detent cam 223 perform the detent function to hold the shift lever 3 in the 1st speed position. Since the slider 42 of the switch box 4 is moved to the lefthand front by these two actions, the individual contacts are moved, as indicated at ① in Fig. 5, such that the contact 456 of the contact plate 45 comes into contact with the conductor 432 and that the conductors 431 and 432 are connected through the contact 457, thus establishing a connection relation for outputting a 1st speed signal. Since, on the other hand, the manual valve connection member 23 shown in Fig. 3 is held immovable by the restriction of the rocking retainer 2 on the stationary member 1, there arises no switching of the manual valve 86 through the control rod 81.

Reverting to Figs. 6 and 7, in order to select the 2nd speed, the shift lever 3 is fallen leftward and then pulled backward. In this leftward fall, the rocking retainer 2 is restricted like before in its longitudinal locking motion, but only the shift lever 3 is left unrestricted. At the time of this action, the ball portion 351 slides the slider 42 of the switch box 4 to the left. In the subsequent backward pulling action, the connection portion 32 of the shift lever 3 slides backward along the slot 53 of the lock plate 5, as shown in Fig. 7(c), to move the slider 42 of the switch box 4 backward. As a result of these two actions, the individual contacts of the contact plate 45 shown in Fig. 5 move by way of passage ②. Since the contact 456 moves to the lefthand back, the conductors 431 and 434 are connected through the contacts 456 and 457 to establish a connection relation to output a 2nd speed signal. In this case, too, the manual valve connection member 23 is left immovable by the restriction of the rocking retainer 2 on the stationary member 1 so that the manual valve 86 is not switched through the control rod 81.

The selection of the 3rd speed is effected by a motion which is symmetric to that of the aforementioned case of the 2nd speed with respect to the point of the D position so that the lever is fallen rightward from the D position and then pushed forward. Since the actions and functions of the individual members at this time are apparent from the foregoing description of actions, no sequential description will be omitted to avoid redundancy. The positions of the shift lever 3 and the lock plate 5 are located, as shown in Fig. 6(c) and Fig. 7(d). Thus, the slider 42 of the switch box 4 takes the righthand front position so that the individual points of the contact plate 45 follow a passage ③ to establish a connection relation to output a 3rd speed signal.

For selecting the 4th speed, moreover, the motion is symmetric to that of the aforementioned 1st speed with respect to the point of the D position so that the shift lever 3 takes the position shown in Fig. 6(d). In this case, the slider 42 of the switch box 4 takes the righthand rear position, and the individual contacts of the contact plate 45 follow a passage ④ to establish a connection relation to output a 4th speed signal.

The speed selecting signals thus produced are processed like the shifting signals, which are outputted from the ordinary automatic transmission in accordance with the running speed and throttle opening of the vehicle, so that they may be used to control shifting solenoid valves.

In this shift system, as has been described in detail hereinbefore, the righthand and lefthand ear portions of the cross-shaped lock plate 5 perform the function as the guide means having the motion along the I pattern of the shift lever 3, when in the automatic shift, and the function as the lock means for locking the rocking retainer 2 when in the manual speed selection. As a result, the system can be made compact by giving the two functions to the single member. Thanks to this relational arrangement of the lock plate 5 and the stationary member 1, the shift system can be housed in the center console (as shown in Fig. 6(a)) 100 of the vehicle. As a result, the lock mechanism can retain a sufficient strength without taking any consideration into the external view. An additional effect of eliminating the restriction on the design of an upper plate 101 can be achieved, as different from the prior art in which the upper plate of the center console has to be strengthened for the guide means. According to the switch arrangement of the present embodiment, moreover, the switch box 4 is attached to the rocking retainer 2 to eliminate the relative motions between the switch box 4 and the shift lever 3 moving among the P, R, N and D positions thereby to minimize the stroke required for the switch contacts. Thus, the switch box 4 itself can be smallsized.

Even if, moreover, the shift lever 3 associated with the gate plate 22 of the rocking retainer 2 is inclined by the manual shift, it is prevented from interfering with the inhibit pin 34 of the inhibit mechanism of the present embodiment merely by pushing up the upper edge 75 forming the associated face of the inhibit plate 7 or by bringing the inhibit pin 34 apart from the upper edge 75. Still moreover, what is done by the inhibit pin 34 of the inhibit mechanism is the function to transmit the displacement to the inhibit plate 7 through the upper edge 75. Then, the load accompanying the inhibiting action is applied to both the plate pin 71 embedded in the inhibit plate 7 and the hole 123 formed in the body 12 of the stationary member 1 and providing the inhibit cam. As a result, a strength similar to that of the prior art is retained by the close arrangement of them without any increase in the strength. Furthermore, the inhibit hole 123 is formed in the body 12 of the stationary member 1 forming part of the manual transmission so that the space and weight increased by providing the inhibit plate 7 can be offset.

According to the present invention, therefore, a shift system with the manual speed selecting mechanism assembled with the inhibit mechanism can be provided by making use of a portion of the manual transmission mechanism without inviting any increase in the size and weight of the mechanism.

## Claims

1. A shift system with a manual speed selecting mechanism for a vehicular automatic transmission, comprising:
a) a stationary member (1) mounted on a vehicle body;
b) a rocking retainer (2) supported in a manner to rock on a first axis (x) formed in said stationary member (1) and connected to the automatic transmission;
c) a shift lever (3) supported in a manner to rotate on said first axis (x) and a second axis (y), which is perpendicular to said first axis (x), and brought into and out of engagement with said rocking retainer (2) when rotated on said second axis (y), and
d) a lock plate (5) supported on said rocking retainer (2),
characterized in that
e) said lock plate (5) comprises a slot (53) for fitting said shift lever (3);
wherein
e₁) said lock plate (5) is engageable with said shift lever (3) at said slot (53), slides together with said shift lever (3) and brings said rocking retainer (2) into and out of engagement with said stationary member (1), when said shift lever (3) is rotated on said second axis (y);
e₂) said shift lever (3) rotates on said first axis (x) along said slot (53) of said lock plate (5) separately from said rocking retainer (2), if said lock plate (5) brings said rocking retainer (2) into engagement with said stationary member (1) when said shift lever (3) is rotated on said second axis (y), and
e₃) said shift lever (3) rotates on said first axis (x) together with said rocking retainer (2), if said lock plate (5) brings said rocking retainer (2) out of engagement with said stationary member (1) when said shift lever (3) is rotated on said second axis (y).

2. A shift system according to Claim 1, further comprising:
a cross sleeve (6) having a first sleeve (61) and a second sleeve (62), said first sleeve supported rotatably on said stationary member; and said second sleeve arranged to intersect said first sleeve at a right angle,
wherein said shift lever (3) is made relatively rotatable in a rotational direction relative to the axis of said second sleeve (62) and supported in a through hole of said second sleeve (62) rotatably together with said first sleeve in a rotational direction relative to the axis of said first sleeve.

3. A shift system according to Claim 2, further comprising: a torsion spring arranged rotatably on the outer side of said second sleeve (62); a torsion spring abutment member (65) fixed on the outer side of said first sleeve (61); and an abutment member mounted on said shift lever (3) in a manner to correspond to said torsion spring abutment member, wherein said spring has its two ends retained individually at the two ends of said torsion spring abutment member and said abutment member, as the shift lever (3) rotates in the through hole of said second sleeve, so that it retains an elasticity a-gainst the rotation of said shift lever.

4. A shift system according to Claim 2 or 3, further comprising: a detent block (223) arranged in said rocking retainer (2) and associated with said shift lever (3) in accordance with the action of said shift lever in the rotational direction of said first axis (x); and a plunger (641) arranged in said first sleeve (61) and urged in a direction perpendicular to the axis of said first sleeve (61) for positioning said detent block (223).

5. A shift system according to any one of Claims 1 to 4, further comprising: an inhibit pin (34) arranged in said shift lever (3) ; an inhibit cam arranged in said stationary member (1); and an inhibit plate (7) supported movably on said rocking retainer (2) and arranged with an associative face associated with said inhibit cam.

6. A shift system according to Claim 5, further comprising a spring arranged between said inhibit plate (7) and said rocking retainer (2) for pushing said inhibit plate against the urging force of said spring to position said inhibit plate (7) on said inhibit cam.

7. A shift system according to Claim 5 or 6, wherein said inhibit plate (7) has slots (72) to be supported on guide posts (213) formed on said rocking retainer (2), to effect association with the action of said inhibit pin (34).

8. A shift system according to any of Claims 1 to 7, further comprising:
a detent mechanism provided between said shift lever (3) and said rocking retainer (2), having a plunger (641) mounted on one of said shift lever and said rocking retainer and a detent block (223) mounted on the other,
wherein said detent mechanism brings the rotation of said shift lever (3) on said first axis (x) relative to said rocking retainer to a sense of detent, when said lock plate (5) brings said rocking retainer into engagement with said stationary member (1) by the rotation of said shift lever on said second axis (y).

9. A shift system according to any of Claims 2 to 7, further comprising:
a detent mechanism provided between said cross sleeve (6) and said rocking retainer (2), having a plunger (641) mounted on one of said shift lever and said rocking retainer and a detent block (223) mounted on the other,
wherein said detent mechanism brings the rotation of said shift lever (3) on said first axis (x) relative to said rocking retainer to a sense of detent, when said lock plate (5) brings said rocking retainer into engagement with said stationary member (1) by the rotation of said shift lever on said second axis (y).

10. A shift system according to any of Claims 1 to 9, wherein said stationary member (1) limits the rotation of said shift lever (3) on said second axis (y) by abutting on said lock plate (5) when said shift lever rotates on said first axis (x).

11. A shift system according to Claim 1 or 10, wherein said rocking retainer (2) has a hole (221) for receiving said shift lever (3), said hole shaping a manual selective shift pattern for guiding the rotation of said shift lever on said first axis (x) and said second axis (y) relative to said rocking retainer ;
when said shift lever (3) is located at a particular position of said hole (221), said lock plate (5) is released from said stationary member (1) and said shift lever rocks on said first axis (x) together with said rocking retainer (2); and
when said shift lever (3) is located at other positions of said hole (221), said lock plate (5) is engaged with said stationary member (1) and said shift lever (3) rotates along said hole (221) separately from said rocking retainer (2).

12. A shift system according to any of Claims 1 to 11, further comprising :
a detecting means for detecting the rotation of said shift lever having a switch box (4) fixed on said rocking retainer (2) and a operating member (35) connected with said shift lever,
wherein said switch box detects the movement of said operating member (35) relative to said rocking retainer (2) when said lock plate (5) brings said rocking retainer into engagement with said stationary member (1) by the rotation of said shift lever (3) on said second axis (y).

13. A shift system according to claim 1, wherein
a) a plurality of range positions (P,R,N,D) for an automatic shifting mode are provided;
b) a plurality of gear speed position (1st,2nd,3rd, 4th) for a manual selecting mode are provided;
c) said rocking retainer (2) is connected with a manual valve (86) of the automatic transmission;
d) a detent mechanism is provided, having a plunger (641) and a detent block (223) abutting said plunger (641), for holding said shift lever (3) in the selected gear speed position for said manual selecting mode, wherein said shift lever (3) selects each of range positions or gear speed positions in rotating on said first axis (x), and switches between said automatic shifting mode and said manual selecting mode in rotating on said second axis (y),
e) said shift lever (3) is released from said rocking retainer (2), and is engageable with only one of said spring (641) and detent block (223), when switching to said manual selecting mode, and
f) said detent mechanism works when said shift lever (3) rotates on said first axis (x).

14. A shift system according to claim 13, characterized by a first shift passage and a second shift passage, arranged with said gear speed position for said manual selecting mode,
wherein said shift lever (3) is released from said rocking retainer (2) and engageable with only one of said plunger (641) and said detent block (223) in both said first and second shift passages.

## Patentansprüche

1. Schaltsystem mit einem manuellen Gangwählmechanismus für ein automatisches Fahrzeuggetriebe, mit:
a) einem feststehenden Teil (1), das an einer Fahrzeugkarosserie angeordnet ist;
b) einer Kippgehäuseeinrichtung (2), die so gelagert ist, daß sie auf einer ersten Achse (X), die in dem feststehenden Teil (1) ausgebildet ist, hin- und herkippen kann, und die mit dem automatischen Getriebe verbunden ist;
c) einem Schalthebel (3), der so gelagert ist, daß er sich auf der ersten Achse (X) und einer zweiten Achse (Y), die senkrecht zur ersten Achse (X) ist, drehen kann, und der mit der Kippgehäuseeinrichtung (2) in und außer Eingriff gebracht wird, wenn er sich auf der zweiten Achse (Y) dreht, und
d) einer Verriegelungsplatte (5), die auf der Kippgehäuseeinrichtung (2) gelagert ist,
dadurch gekennzeichnet, daß
e) die Verriegelungsplatte (5) einen Schlitz (53) zum Einpassen des Schalthebels (3) aufweist;
wobei
e₁) die Verriegelungsplatte (5) mit dem Schalthebel (3) an dem Schlitz (53) eingriffsfähig ist, zusammen mit dem Schalthebel (3) gleitet und die Kippgehäuseeinrichtung (2) mit dem feststehenden Teil (1) in und außer Eingriff bringt, wenn der Schalthebel (3) auf der zweiten Achse (Y) gedreht wird;
e₂) der Schalthebel (3) sich auf der ersten Achse (X) entlang dem Schlitz (53) der Verriegelungsplatte (5) getrennt von der Kippgehäuseeinrichtung (2) dreht, wenn die Verriegelungsplatte (5) die Kippgehäuseeinrichtung (2) mit dem feststehenden Teil in Eingriff bringt, wenn der Schalthebel (3) auf der zweiten Achse (Y) gedreht wird, und
e₃) der Schalthebel (3) sich auf der ersten Achse (X) zusammen mit der Kippgehäuseeinrichtung (2) dreht, wenn die Verriegelungsplatte (5) die Kippgehäuseeinrichtung (2) mit dem feststehenden Teil (1) außer Eingriff bringt, wenn der Schalthebel (3) auf der zweiten Achse (Y) gedreht wird.

2. Schaltsystem nach Anspruch 1, ferner mit:
einer Kreuzbuchse (6) mit einer ersten Buchse (61) und einer zweiten Buchse (62), wobei die erste Buchse drehbar an dem feststehenden Teil gelagert ist; und die zweite Buchse so angeordnet ist, daß sie die erste Buchse in einem rechten Winkel schneidet,
wobei der Schalthebel (3) in einer Drehrichtung relativ zur Achse der zweiten Buchse (62) drehbar ausgeführt ist und in einem Durchgangsloch der zweiten Buchse (62) zusammen mit der ersten Buchse in einer Drehrichtung relativ zur Achse der ersten Buchse drehbar gelagert ist.

3. Schaltsystem nach Anspruch 2, ferner mit: einer Torsionsfeder, die drehbar auf der Außenseite der zweiten Buchse (62) angeordnet ist; einem Torsionsfederanstoßteil (65), das an der Außenseite der ersten Buchse (61) befestigt ist; und einem Anstoßteil, das an dem Schalthebel (3) so befestigt ist, daß es dem Torsionsfederanstoßteil entspricht, wobei die beiden Enden der Feder einzeln an den beiden Enden des Torsionsfederanstoßteils und des Anstoßteils zurückgehalten werden, wenn sich der Schalthebel (3) in dem Durchgangsloch der zweiten Buchse dreht, so daß er eine Elastizität gegen die Drehung des Schalthebels beibehält.

4. Schaltsystem nach Anspruch 2 oder 3, ferner mit: einem Arretierblock (223), der in der Kippgehäuseeinrichtung (2) angeordnet ist und dem Schalthebel (3) entsprechend der Bewegung des Schalthebels in der Drehrichtung der ersten Achse (X) zugeordnet ist; und einem Kolben (641), der in der ersten Buchse (61) angeordnet ist und in eine Richtung senkrecht zur Achse der ersten Buchse (61) zum Positionieren des Arretierblocks (223) gedrängt wird.

5. Schaltsystem nach einem der Ansprüche 1 bis 4, ferner mit: einem Sperrstift (34), der in dem Schalthebel (3) angeordnet ist; einem Arretiernocken, der in dem feststehenden Teil (1) angeordnet ist; und einer Sperrplatte (7), die drehbar auf der Kippgehäuseeinrichtung (2) gelagert und mit einer zugeordneten Seite, die dem Sperrnocken zugeordnet ist, angeordnet ist.

6. Schaltsystem nach Anspruch 5, ferner mit einer Feder, die zwischen der Sperrplatte (7) und der Kippgehäuseeinrichtung (2) angeordnet ist, zum Drücken der Sperrplatte gegen die drängende Kraft der Feder, um die Sperrplatte (7) auf dem Sperrnocken zu positionieren.

7. Schaltsystem nach Anspruch 5 oder 6, wobei die Sperrplatte (7) Schlitze (72) hat, die auf Führungszapfen (213) lagerbar sind, die an der Kippgehäuseeinrichtung (2) ausgebildet sind, um einen Zusammenhang mit der Bewegung des Sperrstift (34) zu bewirken.

8. Schaltsystem nach einem der Ansprüche 1 bis 7, ferner mit:
einem Arretiermechanismus, der zwischen dem Schalthebel (3) und der Kippgehäuseeinrichtung (2) vorgesehen ist, mit einem Kolben (641), der an einem, nämlich dem Schalthebel oder der Kippgehäuseeinrichtung angeordnet ist, und einem Arretierblock (223), der an dem anderen angeordnet ist,
wobei der Arretiermechanismus die Drehung des Schalthebels (3) auf der ersten Achse (X) relativ zu der Kippgehäuseeinrichtung in einen Arretiersinn bringt, wenn die Verriegelungsplatte (5) die Kippgehäuseeinrichtung durch die Drehung des Schalthebels auf der zweiten Achse (Y) mit dem feststehenden Teil (1) in Eingriff bringt.

9. Schaltsystem nach einem der Ansprüche 2 bis 7, ferner mit:
einem Arretiermechanismus, der zwischen der Kreuzbuchse (6) und der Kippgehäuseeinrichtung (2) vorgesehen ist, mit einem Kolben (641), der entweder am Schalthebel oder der Kippgehäuseeinrichtung angeordnet ist, und einem Arretierblock (223), der an dem jeweils anderen Teil angeordnet ist,
wobei der Arretiermechanismus die Drehung des Schalthebels (3) auf der ersten Achse (X) relativ zu der Kippgehäuseeinrichtung in einen Arretiersinn bringt, wenn die Verriegelungsplatte (5) die Kippgehäuseeinrichtung durch die Drehung des Schalthebels auf der zweiten Achse (Y) mit dem feststehenden Teil (1) in Eingriff bringt.

10. Schaltsystem nach einem der Ansprüche 1 bis 9, wobei das feststehende Teil (1) die Drehung des Schalthebels (3) auf der zweiten Achse (Y) durch Anstoßen an der Verriegelungsplatte (5) begrenzt, wenn sich der Schalthebel auf der ersten Achse (X) dreht.

11. Schaltsystem nach Anspruch 1 oder 10, wobei die Kippgehäuseeinrichtung (2) ein Loch (221) zum Aufnehmen des Schalthebels (3) hat, wobei das Loch ein manuelles Wählschaltmuster zum Führen der Drehung des Schalthebels auf der ersten Achse (X) und der zweiten Achse (Y) relativ zu der Kippgehäuseeinrichtung formt;
wenn sich der Schalthebel (3) in einer bestimmten Stellung des Loches (221) befindet, die Verriegelungsplatte (5) von dem feststehenden Teil (1) gelöst wird und der Schalthebel sich auf der ersten Achse (X) zusammen mit der Kippgehäuseeinrichtung (2) hin- und herbewegt; und
wenn sich der Schalthebel (3) in anderen Stellungen des Loches (221) befindet, die Verriegelungsplatte (5) mit dem feststehenden Teil (1) in Eingriff ist und der Schalthebel (3) sich entlang dem Loch (221) getrennt von der Kippgehäuseeinrichtung (2) dreht.

12. Schaltsystem nach einem der Ansprüche 1 bis 11, ferner mit:
einer Ermittlungseinrichtung zum Ermitteln der Drehung des Schalthebels, mit einem Schaltkasten (4), der an der Kippgehäuseeinrichtung (2) befestigt ist, und einen Stellteil (35), das mit dem Schalthebel verbunden ist,
wobei der Schaltkasten die Bewegung des Stellteils (35) relativ zu der Kippgehäuseeinrichtung (2) ermittelt, wenn die Verriegelungsplatte (5) die Kippgehäuseeinrichtung durch die Drehung des Schalthebels (3) auf der zweiten Achse (Y) mit dem feststehenden Teil (1) in Eingriff bringt.

13. Schaltsystem nach Anspruch 1, wobei
a) mehrere Bereichsstellungen (P, R, N, D) für einen automatischen Schaltmodus vorgesehen sind;
b) mehrere Gangstellungen (1., 2., 3., 4.) für einen manuellen Wählmodus vorgesehen sind;
c) die Kippgehäuseeinrichtung (2) mit einem manuellen Ventil (86) des automatischen Getriebes verbunden ist;
d) ein Arretiermechanismus vorgesehen ist, mit einem Kolben (641) und einem Arretierblock (223), der an den Kolben (641) anstößt, zum Halten des Schalthebels (3) in der gewählten Gangstellung für den manuellen Wählmodus, wobei der Schalthebel (3) beim Drehen auf der ersten Achse (X) jede der Bereichsstellungen und Gangstellungen wählt und beim Drehen auf der zweiten Achse (Y) zwischen dem automatischen Schaltmodus und dem manuellen Wählmodus umschaltet,
e) der Schalthebel (3) von der Kippgehäuseeinrichtung (2) gelöst wird und mit nur einem, nämlich der Feder (641) oder dem Arretierblock (223) eingriffsfähig ist, wenn ein Umschalten in den manuellen Wählmodus erfolgt, und
f) der Arretiermechanismus arbeitet, wenn sich der Schalthebel (3) auf der ersten Achse (X) dreht.

14. Schaltsystem nach Anspruch 13, gekennzeichnet durch einen ersten Schaltweg und einen zweiten Schaltweg, der mit der Gangstellung für den manuellen Wählmodus angeordnet ist,
wobei der Schalthebel (3) von der Kippgehäuseeinrichtung (2) gelöst wird und mit nur einem, nämlich dem Kolben (641) oder dem Arretierblock (223) sowohl auf dem ersten als auch auf dem zweiten Schaltweg eingriffsfähig ist.

## Revendications

1. Système de changement de vitesse muni d'un mécanisme de sélection manuelle de vitesse pour une transmission automatique de véhicule, comprenant:
a) un élément fixe (1) monté sur un corps de véhicule;
b) une pièce de retenue oscillante (2) supportée de manière à osciller sur un premier axe (x) formé dans ledit élément fixe (1) et en liaison avec la transmission automatique;
c) un levier (3) de changement de vitesse supporté de manière à pivoter sur ledit premier axe (x) et sur un deuxième axe (y) qui est perpendiculaire audit premier axe (x), et amené en engagement ou hors d'engagement avec ladite pièce de retenue oscillante (2) quand on le fait pivoter sur ledit deuxième axe (y), et
d) une plaque de blocage (5) supportée sur ladite pièce de retenue oscillante (2),
caractérisé en ce que :
e) ladite plaque de blocage (5) comprend une fente (53) destinée à loger ledit levier (3) de changement de vitesse;
dans lequel
e₁) ladite plaque de blocage (5) est apte à venir en engagement avec ledit levier de changement de vitesse (3) au niveau de ladite fente (53), coulisse conjointement avec ledit levier de changement de vitesse (3) et amène ladite pièce de retenue oscillante (2) en engagement et hors d'engagement avec ledit élément fixe (1) quand on fait pivoter ledit levier de changement de vitesse (3) sur ledit deuxième axe (y);
e₂) ledit levier (3) de changement de vitesse pivote sur ledit premier axe (x) le long de ladite fente (53) de ladite plaque de blocage (5) séparément de ladite pièce de retenue oscillante (2), si ladite plaque de blocage (5) fait venir ladite pièce de retenue oscillante (2) en engagement avec ledit élément fixe (1) quand on fait pivoter ledit levier (3) de changement de vitesse sur ledit deuxième axe (y), et
e₃) ledit levier (3) de changement de vitesse pivote sur ledit premier axe (x) conjointement avec ladite pièce de retenue oscillante (2), si ladite plaque de blocage (5) amène ladite pièce de retenue oscillante (2) hors d'engagement avec ledit élément fixe (1) quand on fait pivoter ledit levier (3) de changement de vitesse sur ledit deuxième axe (y).

2. Système de changement de vitesse selon la revendication 1, comprenant, en outre:
un manchon cruciforme (6) comportant un premier manchon (61) et un deuxième manchon (62), ledit premier manchon étant supporté de façon tournante sur ledit élément fixe et ledit deuxième manchon étant disposé de manière à couper perpendiculairement ledit premier manchon,
ledit levier (3) de changement de vitesse étant conçu de manière à pouvoir pivoter relativement dans une direction de pivotement par rapport à l'axe dudit deuxième manchon (62) et étant supporté dans un trou traversant dudit deuxième manchon (62) de façon pivotante conjointement avec ledit premier manchon dans une direction de pivotement par rapport à l'axe dudit premier manchon.

3. Système de changement de vitesse selon la revendication 2, comprenant, en outre: un ressort de torsion disposé de façon pivotante sur le côté extérieur dudit deuxième manchon (62); un élément (65) d'appui de ressort de torsion fixé sur le côté extérieur dudit premier manchon (61); et un élément de butée monté sur ledit levier (3) de changement de vitesse de manière à correspondre audit élément d'appui de ressort de torsion, les deux extrémités du ressort de torsion étant retenues individuellement au niveau des deux extrémités dudit élément d'appui de ressort de torsion et dudit élément de butée. lorsque ledit levier (3) de changement de vitesse pivote dans le trou traversant dudit deuxième manchon, ce qui fait qu'il conserve une certaine élasticité à l'encontre du pivotement dudit levier de changement de vitesse.

4. Système de changement de vitesse selon la revendication 2 ou 3, comprenant, en outre: un bloc d'arrêt (223) disposé dans ladite pièce de retenue oscillante (2) et associé audit levier (3) de changement de vitesse en conformité avec l'action dudit levier de changement de vitesse dans la direction de pivotement dudit premier axe (x⁻); et un plongeur (641) disposé dans ledit premier manchon (61) et poussé dans une direction perpendiculaire à l'axe dudit premier manchon (61) pour positionner ledit bloc d'arrêt (223).

5. Système de changement de vitesse selon l'une quelconque des revendications 1 à 4, comprenant, en outre: un doigt d'interdiction (34) disposé dans ledit levier (3) de changement de vitesse; une came d'interdiction disposée dans ledit élément fixe (1); et une plaque d'interdiction (7) supportée de façon mobile sur ladite pièce de retenue oscillante (2) et disposée avec une face associative associée à ladite came d'interdiction.

6. Système de changement de vitesse selon la revendication 5, comprenant, en outre, un ressort disposé entre ladite plaque d'interdiction (7) et ladite pièce de retenue oscillante (2) pour pousser ladite plaque d'interdiction à l'encontre de la force de poussée dudit ressort afin de positionner ladite plaque d'interdiction (7) sur ladite came d'interdiction.

7. Système de changement de vitesse selon la revendication 5 ou 6, dans lequel ladite plaque d'interdiction (7) comporte des fentes (72) pour être supportée sur des supports de guidage (213) formés sur ladite pièce de retenue oscillante (2) de manière à coopérer avec l'action dudit doigt d'interdiction (34).

8. Système de changement de vitesse selon l'une quelconque des revendications 1 à 7, comprenant, en outre:
un mécanisme d'arrêt disposé entre ledit levier (3) de changement de vitesse et ladite pièce de retenue oscillante (2) et comportant un plongeur (641) monté sur l'un des éléments constitués par ledit levier de changement de vitesse et ladite pièce de retenue oscillante ainsi qu'un bloc d'arrêt (223) monté sur l'autre de ces éléments,
ledit mécanisme d'arrêt amenant le pivotement dudit levier (3) de changement de vitesse sur ledit premier axe (x) par rapport à ladite pièce de retenue oscillante à avoir lieu dans le sens d'un arrêt quand ladite plaque de blocage (5) fait venir ladite pièce de retenue oscillante en engagement avec ledit élément fixe (1) par suite du pivotement dudit levier de changement de vitesse sur ledit deuxième axe (y).

9. Système de changement de vitesse selon l'une quelconque des revendications 2 à 7, comprenant, en outre:
un mécanisme d'arrêt présent entre ledit levier cruciforme (6) et ladite pièce de retenue oscillante (2) et comportant un plongeur (641) monté sur l'un des éléments constitués par ledit levier de changement de vitesse et ladite pièce de retenue oscillante ainsi qu'un bloc d'arrêt (223) monté sur l'autre de ces éléments,
ledit mécanisme d'arrêt amenant le pivotement dudit levier (3) de changement de vitesse sur ledit premier axe (x) par rapport à ladite pièce de retenue oscillante à avoir lieu dans le sens d'un arrêt quand ladite plaque de blocage (5) fait venir ladite pièce de retenue oscillante en engagement avec ledit élément fixe (1) par suite du pivotement dudit levier de changement de vitesse sur ledit deuxième axe (y)

10. Système de changement de vitesse selon l'une quelconque des revendications 1 à 9, dans lequel ledit élément fixe (1) limite le pivotement dudit levier de changement de vitesse (3) sur ledit deuxième axe (y) par sa venue en butée contre ladite plaque de blocage (5) quand ledit levier de changement de vitesse pivote sur ledit premier axe (x).

11. Système de changement de vitesse selon la revendication 1 ou 10, dans lequel ladite pièce de retenue oscillante (2) comporte un trou (221) destiné à recevoir ledit levier (3) de changement de vitesse, ledit trou établissant par sa forme un diagramme de changement de vitesse à sélection manuelle destiné à guider le pivotement dudit levier de changement de vitesse sur ledit premier axe (x) et ledit deuxième axe (y) par rapport à ladite pièce de retenue oscillante;
quand ledit levier (3) de changement de vitesse se trouve dans un endroit particulier dudit trou (221), ladite plaque de blocage (5) est libérée dudit élément fixe (1) et ledit levier de changement de vitesse oscille sur ledit premier axe (x) conjointement avec ladite pièce retenue oscillante (2); et
quand ledit levier (3) de changement de vitesse se trouve dans d'autres endroits dudit trou (221), ladite plaque de blocage (5) est en engagement avec ledit élément fixe (1) et ledit levier (3) de changement de vitesse pivote le long dudit trou (221) séparément depuis ladite pièce de retenue oscillante (2).

12. Système de changement de vitesse selon l'une quelconque des revendications 1 à 11, comprenant, en outre:
un moyen de détection destiné à détecter le pivotement dudit levier de changement de vitesse et comportant une boîte de commutation (4) fixé sur ladite pièce de retenue oscillante (2) et un élément d'actionnement (35) relié audit levier de changement de vitesse,
ladite boîte de commutation détecte le déplacement dudit élément d'actionnement (35) par rapport à ladite pièce de retenue oscillante (2) quand ladite plaque de blocage (5) amène ladite pièce de retenue oscillante en engagement avec ledit élément fixe (1) par suite du pivotement dudit levier (3) de changement de vitesse sur ledit deuxième axe (y).

13. Système de changement de vitesse selon la revendication 1, dans lequel :
a) une pluralité de positions de gammes de vitesse (P, R, N, D) pour un mode de changement de vitesse automatique sont prévues;
b) une pluralité de positions de rapports de vitesse (1ère, 2ième, 3ième, 4ième) pour un mode de sélection manuelle sont prévues;
c) ladite pièce de retenue oscillante (2) est reliée à une valve manuelle (86) de la transmission automatique;
d) un mécanisme d'arrêt est prévu, ce mécanisme comportant un plongeur (641) et une bloc d'arrêt (223) contre lequel vient buter ledit plongeur (641) pour maintenir ledit levier (3) de changement de vitesse dans la position de rapport de vitesse sélectionnée pour ledit mode de sélection manuel, ledit levier (3) de changement de vitesse sélectionnant chacune des positions de gammes de vitesse ou des positions de rapports de vitesse en pivotant sur ledit premier axe (x,) et effectuant une permutation entre ledit mode de changement automatique de vitesse et ledit mode de sélection manuelle en pivotant sur ledit deuxième axe (y),
e) ledit levier (3) de changement de vitesse est dégagé de ladite pièce de retenue oscillante (2) et peut venir en engagement avec seulement ledit ressort (641) ou ledit bloc d'arrêt (223) lors d'une permutation sur ledit mode de sélection manuelle, et
f) ledit mécanisme d'arrêt agit quand ledit levier (3) de changement de vitesse pivote sur ledit premier axe (x).

14. Système de changement de vitesse selon la revendication 13, caractérisé par un premier passage de changement de vitesse et un deuxième passage de changement de vitesse, associés à ladite position de vitesse pour ledit mode de sélection manuelle,
ledit levier (3) de changement de vitesse étant dégagé de ladite pièce de retenue oscillante (2) et pouvant venir en engagement avec seulement le plongeur (641) ou ledit bloc d'arrêt (223) dans les deux premier et deuxième passages de changement de vitesse précités.
